# FASCICULE DE BREVET EUROPEEN

(11) **EP 3 575 689 B1**
(45) Date de publication et mention de la délivrance du brevet: **27.07.2022**
(21) Numéro de dépôt: 19177130.2
(22) Date de dépôt: 28.05.2019
(51) Int. Cl.: F23R 3/60, F23R 3/00, F23R 3/50

(54) **MODULE DE COMBUSTION DE TURBOMACHINE A GAZ AVEC BUTEE DE FOND DE CHAMBRE**
GASVERBRENNUNGSMODUL EINES TURBOTRIEBWERKS MIT ANSCHLAG AM BRENNKAMMERBODEN
GAS TURBINE ENGINE COMBUSTION MODULE WITH CHAMBER BOTTOM ABUTMENT

(30) Priorité: 28.05.2018 FR 1854505
(43) Date de publication de la demande: 04.12.2019
(73) Titulaire: SAFRAN AIRCRAFT ENGINES, 75015 Paris (FR)
(72) Inventeur: LUNEL, Romain Nicolas, 77550 MOISSY CRAMAYEL CEDEX (FR); BONNEFOI, Damien, 77550 MOISSY-CRAMAYEL (FR); PIEUSSERGUES, Christophe, 77550 MOISSY CRAMAYEL CEDEX (FR); NAMER, Luc, 77550 MOISSY-CRAMAYEL (FR); RAULIN, Dominique, 77310 SAINT FARGEAU PONTHIERRY (FR); JOORY, Dan Ranjiv, 77550 MOISSY-CRAMAYEL (FR); VILLENAVE, Benjamin Frantz Karl, 77550 MOISSY-CRAMAYEL (FR)
(74) Mandataire: Ernest Gutmann - Yves Plasseraud S.A.S.

(56) Documents cités:
- EP-A1- 2 031 303
- EP-A2- 2 273 197
- EP-A2- 2 402 566
- EP-A2- 2 527 744
- FR-A1- 2 989 426
- JP-A- S 599 431
- JP-A- S5 640 027
- JP-U- S59 113 663
- US-A1- 2012 036 857
- US-B1- 6 216 442

## Description

La présente invention concerne un module de combustion de turbomachine à gaz, précisément celui situé dans l'environnement de la chambre de combustion de la turbomachine, lequel est typiquement une turbomachine pour aéronef, telle qu'un turboréacteur double flux.

Dans une telle turbomachine, d'amont en aval, une partie de l'air total absorbé en entrée passe dans au moins un compresseur, est diffusée dans une chambre de combustion, où l'air est mélangé à du carburant injecté. Enflammé, le mélange brûle dans la chambre de combustion, puis circule dans au moins une turbine, avant d'être éjecté vers l'aval.

De fait, est déjà connu un module de de combustion de turbomachine à gaz pour aéronef présentant un axe longitudinal et comprenant :
- un carter interne,
- un carter externe disposé radialement à l'extérieur du carter interne,
- une chambre de combustion :
   -- allongée selon une direction axiale confondue avec ledit axe longitudinal,
   -- dans laquelle un mélange d'air et de carburant doit circuler d'amont vers l'aval, et disposée entre le carter interne et le carter externe, la chambre de combustion comprenant, autour de l'axe longitudinal, une paroi de révolution interne et une paroi de révolution externe reliées en amont à une paroi de fond de chambre et fixées en aval respectivement avec le carter interne et le carter externe, et
   des premières parties de butées et des secondes parties de butées fixées respectivement avec le carter externe et avec la chambre de combustion, les premières et secondes parties de butées étant adaptées pour venir en butée sensiblement axialement deux à deux en formant des couples de butées, et, dans certains au moins des couples de butées :
   -- la première partie de butée se présentant comme une excroissance intérieure présente sur le carter externe, à surfaces respectivement axiale et radiale, vis-à-vis de l'axe longitudinal.

Dans le présent texte l'expression « sensiblement » appliquée à une direction ou un axe (telle que sensiblement axial, ou sensiblement radial) a pour sens « à 5°» près.

A noter aussi que les « composantes » (telle qu'une « composante axiale ») d'une force sont les projections d'une force en vecteurs orthogonaux selon un système d'axes donné.

Par ailleurs, l'amont est le côté par où, via un système d'injection, le mélange d'air et de carburant arrive dans la chambre annulaire de combustion.

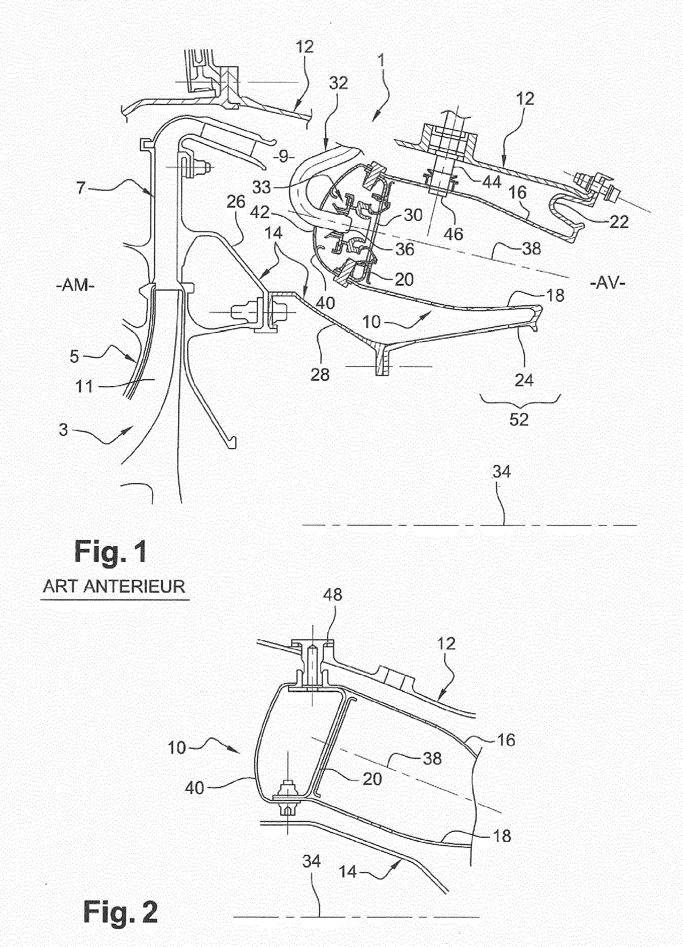

Sur les figures 1-2 est illustrée une réalisation actuelle d'un tel module 1 de combustion de turbomachine, la figure 2 schématisant le montage de la chambre de combustion.

En amont (AM) du module de combustion 1, la turbomachine comprend un compresseur 3 - qui peut être un compresseur haute pression disposé axialement à la suite d'un compresseur basse pression - dont la partie aval (visible sur la figure) comprend un étage 5 centrifuge, et un diffuseur 7 annulaire raccordé en aval du compresseur 3. Le diffuseur 7 débouche dans un espace 9 entourant une chambre de combustion 10 annulaire. Outre la chambre de combustion 10, le module de combustion 1 comprend, autour d'elle, un carter externe 12 et un carter interne 14 qui délimitent l'espace 9. La chambre de combustion 10 est maintenue en aval (AV) par des brides de fixation reliées aux carters 12 et 14. La manière de maintenir la chambre de combustion pourrait être différente ; voir par exemple EP2003399 ou FR2989426 ou encore EP2273197 qui divulgue un module de combustion de turbomachine à gaz pour aéronef selon le préambule de la revendication 1.

Sur les figures 1-2, le compresseur 3 est centrifuge et comprend un impulseur rotatif 11 réalisé de façon à accélérer l'air qui le traverse et, de ce fait, à accroître l'énergie cinétique de cet air.

Le diffuseur 7 entoure annulairement l'impulseur. Le diffuseur 7 sert à réduire la vitesse de l'air quittant l'impulseur et, de ce fait, à accroître sa pression statique.

La chambre 10 comprend une paroi de révolution externe 16 et une paroi de révolution interne 18 reliées en amont à une paroi 20 transversale annulaire, ou paroi de fond de chambre, et fixées en aval par des brides annulaires radialement externe 22 et interne 24 respectivement sur une extrémité aval du carter externe 12 de la chambre et sur un carter interne 14. On peut considérer que le carter interne 14 qui longe la chambre 10 est défini par, ou comprend, une virole 26 du diffuseur et un voile intermédiaire 28 interne fixé en amont à la virole26 et en aval à la bride interne 24.

La paroi de fond de chambre 20 comporte des orifices 30 de passage d'un mélange d'air et de carburant dans la chambre 10, l'air provenant du diffuseur 7 et le carburant étant amené par des injecteurs 32. Les injecteurs 32 sont fixés à leurs extrémités radialement externes sur le carter externe 12 et régulièrement répartis sur une circonférence autour de l'axe de révolution 34 de la chambre. Chaque injecteur 32 comprend à son extrémité radialement interne une tête 36 d'injection de carburant qui est alignée avec l'axe 38 d'un des orifices 30 correspondant de la paroi 20 de la chambre, cet axe 38 étant confondu sur le dessin avec l'axe longitudinal de la section illustré de la chambre.

L'aspect radial sera, dans la présente demande, apprécié par rapport aux axes 34 et 38, l'aspect axial étant donc apprécié en référence à l'un ou l'autre desdits axes 34 et 38, l'axe 34 de révolution de la chambre de combustion 10 étant lui-même parallèle à (confondu avec) l'axe longitudinal de la turbomachine.

Un capot 40, qui peut être annulaire et incurvé vers l'amont, est fixé sur les extrémités amont des parois 16, 18 et 20 de la chambre et comprend des orifices 42 de passage d'air alignés avec les orifices 30. Le mélange d'air et de carburant injecté dans la chambre 10 est enflammé au moyen d'au moins d'au moins une bougie d'allumage 44 qui s'étend radialement à l'extérieur de la chambre. La bougie 44 est guidée à son extrémité radialement interne dans un orifice 46 de la paroi externe 16 de la chambre.

Dans la technique actuelle, et comme dans l'exemple de la figure 2, une fixation amont de la chambre de combustion 10 peut être réalisée par au moins trois broches 48 de fixation circonférentiellement réparties autour de l'axe 34.

Préférentiellement, ces broches 48 sont présentes au nombre de quatre et sont réparties de manière uniforme autour de l'axe 34.

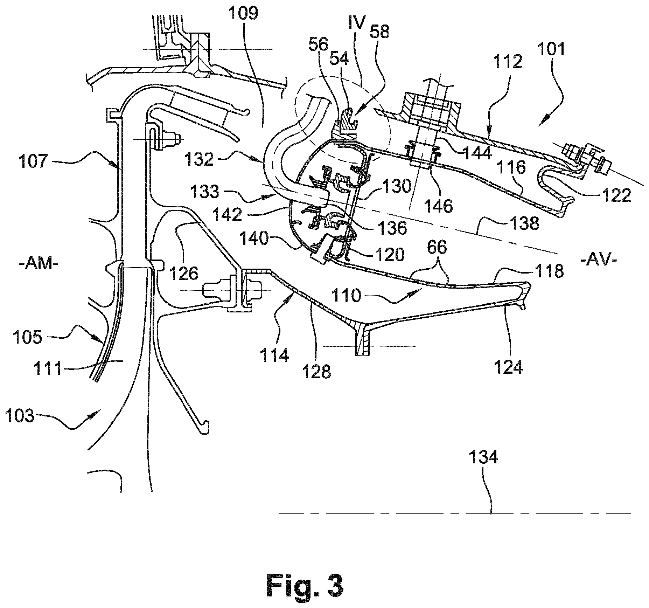

Mais, si les températures et pressions augmentent au-delà d'un certain seuil (500 à 700 °C et 25 à 35×10⁵ Pa), des déformations importantes surviennent. A certains endroits, en particulier la paroi de fond de chambre 20 se déforme axialement exagérément entre les broches de fixation 48. Ces déformations engendrent :
- des déplacements du système d'injection 33 autour de l'injecteur 32, provoquant des brûlures de ce dernier, et dégradant l'opérabilité, notamment en rallumage,
- une ovalisation de la sortie chambre (zone 52 figure 1), ce qui provoque des brûlures des distributeurs haute pression (DHP) situés en aval (AV figures 1,3) de la chambre de combustion, et entraine une dégradation des performances.

Ces conséquences sont inacceptables. En outre, rechercher une solution qui évite d'ajouter un délai supplémentaire notable au cycle de fabrication et qui permette de conserver (le plus possible) à l'identique les pièces existantes est une démarche ici visée.

Avec des premières et secondes parties de butées comme précitées, adaptées pour venir en butée sensiblement axialement deux à deux en formant des couples de butées, on va pouvoir jouer sur des positions relatives pour régler, aux températures et pressions prévues, un éventuel jeu axial ou au contraire une mise en précontrainte, sans avoir à modifier les pièces alentours.

A ce sujet, il est a priori prévu que lesdits couples de butées viennent en complément des moyens de fixation amont de la chambre, tels les broches 48.

Afin de favoriser la prise en compte pertinente de problèmes d'isostatisme qui vont apparaitre et de favoriser un positionnement, en particulier axial, précis de la chambre de combustion, il est proposé dans l'invention une solution telle que présentée en revendication 1.

Ainsi, dans certains au moins des couples de butées, - la seconde partie de butée présentera une surface extérieure circonférentielle à composante axiale d'où fera saillie localement, en regard de la première partie de butée, une excroissance sensiblement radiale extérieure contre laquelle pourra venir en butée la surface sensiblement radiale de la première partie de butée.

Dès lors que, comme déjà précisé, l'expression « composante » se réfère au fait que les composantes d'une orientation sont ses projections en vecteurs orthogonaux selon un système d'axes donné, les projections sont donc ici respectivement suivant l'axe référencé ci-après 134 et radialement à lui.

A cette étape, il est noté que la solution ici présentée décrit ainsi une butée axiale avec un jeu radial. Elle ne sert pas à maintenir la chambre de combustion en place, mais à conserver un positionnement axial précis de la chambre de combustion par rapport à l'(aux) injecteur(s) de carburant (référence 32 ci-après), ainsi qu'à reprendre les efforts dus à la pression, lorsque la turbomachine fonctionne.

Le brevet US 6 216 442 divulgue, de façon différente, un système de maintien d'une chambre de combustion tubulaire dans un carter ; il y est donc prévu un système d'accrochage à part entière de la chambre de combustion contrairement à la solution ici présentée. Au brevet US 6 216 442, le système d'accrochage doit donc servir à bloquer axialement mais aussi radialement la chambre de combustion, d'où une surface prévue à 45°.

Selon un mode de réalisation, il est aussi a priori prévu que les secondes parties de butées fixées avec la chambre de combustion viennent en butée de l'amont vers l'aval avec les premières parties de butées. Ceci pourra notamment être prévu à température ambiante et turbomachine à l'arrêt.

Ainsi anticipera-t-on que, selon un mode de réalisation, à température ambiante et turbomachine à l'arrêt, la seconde partie de butée soit axialement en butée contre la première partie de butée, dans certains au moins des couples de butées.

Un intérêt d'une solution par butées est qu'on peut ainsi agir dans un sens ou en sens inverse, suivant les positions relatives des premières et secondes parties de butées

Selon un mode de réalisation, il est aussi possible de prévoir qu'au moins un jeu sensiblement radial soit établi entre les premières et secondes parties de butées de chaque couple de butées.

De la sorte, on pourra établir ou autoriser un débattement radial afin de permettre sans contraintes excessives d'absorber le jeu né de la différence de dilatations entre le carter externe et la chambre de combustion ainsi que des tolérances de chacune des pièces. On pourra ainsi ne rependre que les déplacements axiaux.

Selon un mode de réalisation, pour associer un maintien sécurisé des parties de butées et une mise en place / retrait (pour remplacement) aisé et rapide et ce dans un environnement exigu, il est par ailleurs proposé :
- que soit donc prévu au moins un injecteur de carburant passant à travers au moins un orifice du carter externe pour amener du carburant à l'intérieur de la chambre de combustion, et
- sur au moins un dit couple de butées :
   -- que, par l'intermédiaire d'une partie formant une bague, la première partie de butée soit montée dans ledit orifice du carter externe, et
   -- que la seconde partie de butée appartienne à une plaque localement épaulée, fixée sur une périphérie extérieure de la chambre de combustion.

Il est même proposé selon un mode de réalisation, pour les mêmes raisons :
- que la paroi de révolution externe soit reliée à la paroi de fond de chambre par des vis,
- et que les secondes parties de butées soient fixées de façon radialement extérieure avec la chambre de combustion par certaines desdites vis.

Le maintien de la première partie de butée est aussi un point important, compte tenu des efforts en jeu.

Deux solutions ont plus particulièrement été envisagées :

Selon un mode de réalisation, l'excroissance intérieure présente un doigt qui s'appuie contre une surface interne du carter externe.

Tout en restant dans l'encombrement du carter externe, on peut ainsi diriger le chemin d'efforts vers ce carter et profiter du doigt pour manœuvrer cette première partie de butée et l'orienter angulairement au mieux.

Selon un autre mode de réalisation, ladite partie formant bague présente une collerette, ceci à l'endroit d'un diamètre radialement extérieur (de cette bague), l'excroissance intérieure étant alors dépourvue d'appui contre le carter externe.

La première solution permet de positionner la première partie de butée par l'intérieur du carter externe, alors que la seconde solution facilite ce montage en permettant de positionner la première partie de butée par l'extérieur du carter externe. La collerette permettant également de maintenir la première partie de butée dans l'orifice du carter, ce qui permet de s'affranchir du doigt présent dans la première solution.

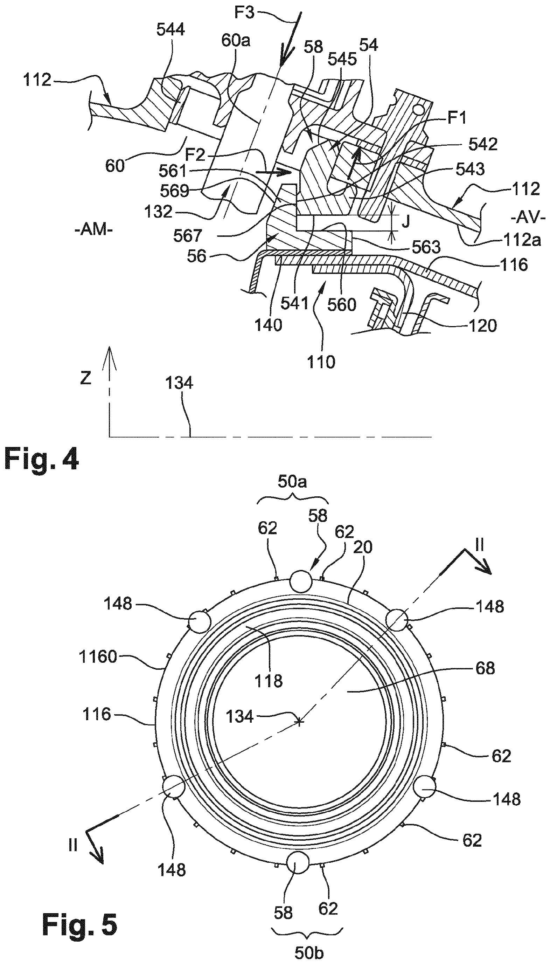

Selon un mode de réalisation, il a par ailleurs été noté que disposer lesdits couples de butées en azimuth au moins à 12H (zone supérieure de la verticale) et 6H (zone inférieure de la verticale ; voir zones 50a,50b figure 5 ci-après) stabilisait efficacement la chambre de combustion dans l'axe souhaité, là où les contraintes ont été constatées comme les plus fortes, sans apporter de sur-contrainte pas ailleurs.

En termes d'avantages obtenus globalement avec tout ou partie des caractéristiques qui précèdent, il pourra être noté :
- la possibilité de surmonter l'inconvénient d'un environnement exigu,
- la possibilité de n'avoir pas à modifier le carter externe ni la chambre de combustion,
- celle de pouvoir récupérer des pièces déjà fabriquées,
- l'utilisation d'une technologie certifiable pour une série de plusieurs turboréacteurs,
- la possibilité de reprendre des efforts de plusieurs centaines de daN,
- la possibilité de s'exonérer d'une forte contrainte de temps (arrêt pour montage).

Outre ce qui précède selon un mode de réalisation, est aussi concernée une partie de turbomachine comprenant :
- au moins un compresseur et un diffuseur d'air situé en sortie dudit au moins un compresseur, et
- un module de combustion présentant tout ou partie des caractéristiques qui précèdent, et dans lequel le carter interne (114 ci-après) comprend un voile intermédiaire (128 ci-après) fixé avec une virole (126 ci-après) du diffuseur (107 ci-après).

L'invention sera si nécessaire mieux comprise et d'autres détails, caractéristiques et avantages pourront apparaître à la lecture de la description suivante faite à titre d'exemple non limitatif en référence aux dessins annexés.

### BREVE DESCRIPTION DES FIGURES

- la figure 1 est une vue schématique en coupe axiale (axe 34/134 ci-après) d'une partie de turbomachine comprenant un diffuseur et un module de combustion selon l'art antérieur,
- la figure 2 est la même vue schématique, mais plus localisée et décalée angulairement autour dudit axe 34/134 ci-après ; on peut aussi considérer qu'il s'agit visuellement de la coupe II-II de la figure 5,
- la figure 3 est aussi la même vue schématique que la figure 1, mais dans une version « évoluée » conforme à une solution en adéquation avec l'invention,
- la figure 4 est le détail IV de la figure 3 et correspond à la coupe IV-IV de la figure 6,
- la figure 5 est vue schématique depuis l'aval (AV) de l'intérieur de la chambre de combustion, dans sa partie entourée par la paroi externe (axe 134 ci-après) de la chambre ; les éléments ci-après 58,148 sont matérialisés par des ronds aux emplacements qui pourraient être les leurs, angulairement,
- les figures 6,7 sont deux vues locales en perspective desdites secondes et premières parties (56,54 ci-après) de butées respectivement, dans leur environnement structurel, et
- la figure 8 illustre une alternative à la solution de la figure 7, en position contre le carter externe.

### DESCRIPTION DETAILLEE

Si l'on se réfère aux figures 3 et suivantes, on voit donc différents détails d'un exemple de réalisation selon une solution conforme à l'invention.

Dans cette solution, les éléments qui peuvent être structurellement et/ou fonctionnellement identiques à ceux déjà présentés en liaison avec la solution de l'art antérieur illustré figures 1-2 ne sont pas redécrits ci-après ; leur référence est juste augmentée de 100 et ils sont repérés ainsi sur tout ou partie des figures 3-7.

Ainsi, le module de combustion est devenu 101 et la chambre de combustion, qui est devenue 110, est toujours contenue dans le module 101, avec les carters externe 112 et interne 114. Le module 101 est toujours agencé en aval d'au moins un compresseur 103 et, comme dans la version en exemple, en sortie du diffuseur annulaire 107.

Dans cette solution, on va pouvoir limiter/éviter des déformations sensiblement axiales importantes, au niveau de la paroi de fond de chambre 120, en prévoyant, comme on peut le voir notamment figure 4, des premières parties de butées 54 et des secondes parties de butées 56 fixées respectivement avec le carter externe 112 et avec la chambre annulaire de combustion 110.

Ces premières et secondes parties 54,56 de butées sont adaptées pour venir en butée sensiblement axiale (donc suivant sensiblement l'axe 134), deux à deux, en formant des couples de butées 58.

Figure 4, on voit d'ailleurs en butée axiale deux telles parties 54,56, l'une contre l'autre, ici à 12H.

Il pourra être préféré que les couples de butées 58 ne se substituent pas aux broches de fixation amont précitées, mais viennent en complément de celles-ci, repérées 148 figure 5, pour continuer à profiter de leur effet stabilisant. On aura compris que ces moyens de fixation amont de la chambre 110 peuvent correspondre aux broches 48/148, avec un montage comme celui des figures 2 et 5. Ainsi les broches 48 et 148 peuvent être identiques.

Une mise en butée (sensiblement) axiale des parties 54,56, voire une précontrainte (sensiblement) axiale entre elles, pourra d'ailleurs être prévue dès la température ambiante (20°C) et turbomachine à l'arrêt, de façon à anticiper la possibilité d'efforts et de déplacements relatifs sensiblement axiaux rapidement très importants, dès la mise en fonctionnement de la turbomachine.

Ainsi anticipe-t-on qu'à température ambiante et turbomachine à l'arrêt, dans certains au moins des couples de butées 58, la seconde partie de butée 56 puisse être axialement en butée contre la première partie 54 de butée.

Compte tenu des contraintes pour partie anticipées, il a par ailleurs été choisi que les secondes parties 56 de butées fixées avec la chambre de combustion viennent en butée de l'amont (AM) vers l'aval (AV) avec les premières parties 54 de butées.

On va ainsi pouvoir limiter/éviter qu'au-delà d'un certain seuil (par exemple 500-700 °C et 25-35×10⁵ Pa), une partie au moins de la paroi de fond de chambre 120 se déplace exagérément vers l'aval.

De façon à ne rependre que les déplacements axiaux, tout en absorbant, alors que la turbomachine fonctionne, un jeu né de la différence de dilatations entre le carter externe 112 et la chambre de combustion 110 ainsi que des tolérances de fabrication de chacune des pièces, on pourra trouver avantageux de prévoir qu'au moins un jeu J sensiblement radial (axe Z figure 4) soit établi entre les premières et secondes parties 54-56 de butées de chaque couple de butées.

Le jeu J est censé n'être jamais consommé, donc les surfaces ci-après 541/560 sont censées être sans contact entre elles.

Concernant ces couples 58 de butées, on les disposera en toutes zones autour de la circonférence de la chambre de combustion 110 afin de reprendre les déplacements observés. On pourra préférer le faire au moins en azimuth à 12H (zone supérieure de la verticale) et 6H (zone inférieure de la verticale); zones respectivement 50a,50b figure 5. Ainsi, on pourra bien retenir la chambre de combustion 110 entre les quatre broches 148 de fixation circonférentiellement réparties de manière uniforme autour de l'axe 134 (retenues possibles en particulier entre les broches 148 à 135° et 225°, d'une part, et à 315° et 45° d'autre part).

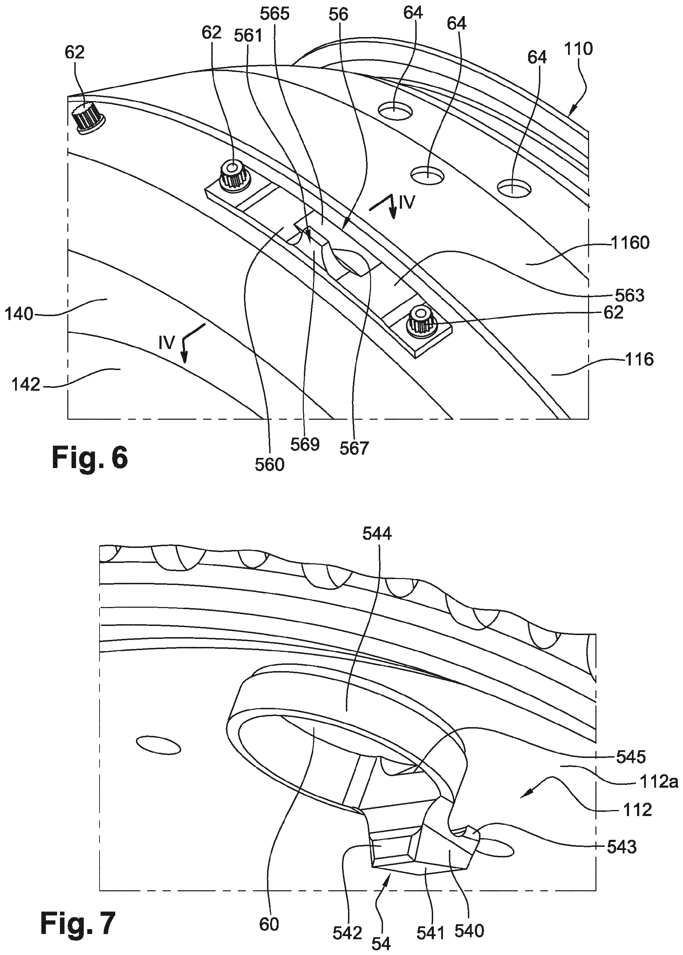

Pour éviter un hyper-statisme, il est par ailleurs proposé dans l'exemple privilégié retenu :
- que, comme représenté sur la figure 7, la première partie 54 de butée se présente comme une excroissance intérieure 540 à surfaces respectivement sensiblement axiale 541 et sensiblement radiale 542, et
- que, comme représenté sur la figure 6, la seconde partie 56 de butée présente une surface extérieure circonférentielle 560 à composante axiale d'où fasse saillie localement, en regard de la première partie 54 de butée, une excroissance 561 sensiblement radiale extérieure contre laquelle pourra venir en butée la surface sensiblement radiale 542 de la première partie 54 de butée.

L'excroissance intérieure 540 prolonge radialement vers l'intérieur une partie 544 formant bague de la première partie 54 de butée.

Dans la solution des figures 4 à 7, la butée axiale s'effectue entre la surface radiale 542 de l'excroissance intérieure 540 orientée vers l'amont et celle 567 de l'excroissance 561 orientée vers l'aval.

Quant aux butées radiales, elles peuvent s'opérer entre les surfaces 541 et 560, où le jeu J peut être prévu permanent, donc a priori exister à température ambiante et turbomachine à l'arrêt.

Les surfaces radiales 542 et 567 seront de préférence chacune planes afin d'assurer alors un contact alors plan-plan.

Pour amener le carburant à l'intérieur de la chambre de combustion 110, on aura noté figures 3-4, la présence d'au moins un injecteur 132 de carburant passant à travers au moins un orifice 60 du carter externe 112, cet injecteur débouchant ensuite, par sa tête 136, vers le fond (zone amont donc) de la chambre 110, ceci suivant sensiblement l'axe 138, ici à travers l'orifice 142 du capot 140 et celui, coaxial, 130 de la paroi de fond de chambre 120.

Pour associer un maintien sécurisé des parties de butées 54-56, et tant une mise en place qu'un remplacement pratique, ceci dans un environnement exigu, la solution présentée propose, sur chaque couple 58 de butées :
- que, par l'intermédiaire d'une dite partie 544 formant une bague, la première partie 54 de butée soit montée serrée, de façon radialement intérieure, localement dans l'orifice 60 concerné du carter externe 112 (voir figure 7), et
- que la seconde partie 56 de butée appartienne à une plaque 563 localement épaulée (dans l'exemple présence de l'excroissance 561 sensiblement radiale extérieure) fixée sur une périphérie extérieure 1160 de la chambre de combustion (voir figure 6).

La périphérie extérieure 1160 de la chambre 110 est ici formée par la périphérie extérieure de la paroi externe 116 de la chambre 110.

Pour les mêmes raisons, la solution présentée prévoit même:
- que la paroi externe 116 soit reliée, en fond de la chambre, ici au capot ou carénage 140, par des vis 62 circonférentiellement réparties autour de l'axe 138,
- et que les secondes parties 56 de butées soient fixées de façon radialement extérieure avec la chambre de combustion 110 par certaines de ces vis 62.

Les vis 62 sont radiales. Elles traversent un rebord axial du capot 140, une extrémité amont de la paroi externe 116 et un rebord axial tourné vers l'amont de la paroi de fond 120 de la chambre 110. Leurs têtes font saillie dans l'espace entre la parois externe 116 et le carter externe 112.

La plaque 563 de la seconde partie 56 de butée sera alors elle-même cintrée et se prolongera circonférentiellement bien au-delà de l'excroissance 561, comme dans l'exemple de la figure 6. En aval, axialement en regard de l'excroissance 561, la surface extérieure circonférentielle 560 de cette partie 56 de butée pourra se présenter comme localement plane (zone 565 figure 6), de même pour la surface 541 en regard.

Figures 3 et 6, on peut constater la présence de trous 64,66 (appelés aussi trous primaires et trous de dilution) à travers respectivement les parois externe 116 et interne 118. Ainsi, le volume annulaire intérieur 68 de la chambre 110, où débouchent les injecteurs 132 et qui s'étend axialement entre les parois externe 116 et interne 118 peut être alimenté en air de dilution issu du compresseur 103, via le diffuseur annulaire 107, dans exemple.

Figure 3, on aura aussi constaté la présence des fixations aval 122,124, ou brides, entre respectivement la paroi de révolution externe 116 et le carter externe 112, et entre la paroi de révolution interne 118 et le carter interne 114, ces liaisons/fixations pouvant être directes ou indirectes.

Dans la version illustrée figure 7, l'excroissance intérieure 540 de la première partie 54 de butée présente un doigt 543 qui s'appuie contre la surface interne 112a du carter externe 112. Ainsi, le doigt 543 est recourbé radialement vers l'extérieur. Il cale la première partie 54 de butée et repartit/reprend les efforts radiaux exercés radialement vers l'extérieur par la seconde partie 56 de butée qui lui fait face (surface 560 ; effort F1, figure 4). Angulairement, autour de l'orifice 60, le doigt 543 sera de préférence en outre orienté dans la direction de l'effort axial principal devant être exercé sur cette première partie 54 de butée (effort F2, figure 4). Le doigt 543 est ainsi, dans la solution présentée, positionné en aval de la surface 542.

Le doigt 543 facilite par ailleurs le positionnement de cet ensemble de butées qui forme donc une butée de carter.

Pour faciliter le positionnement de l'injecteur 132 à travers l'orifice 60, la première partie 54 de butée présente un chanfrein 545. Positionné sur la bague 544, sur son diamètre interne, comme on le voit figures 4,7, le chanfrein 545 guide l'injecteur 132 vers l'axe de l'orifice 60. Le chanfrein 545 pourra à cet égard avantageusement être suivi, sensiblement dans la continuité de sa pente, par un second chanfrein 569 que présentera alors, côté amont, la seconde partie 56 de butée qui est associée à cette première partie 54 de butée. De fait, l'engagement de l'injecteur 132 à travers l'orifice 60 s'opérant radialement de l'extérieur vers l'intérieur (flèche F3 figure 4), le second chanfrein 569 sera de préférence plus près de l'axe 60a de l'orifice 60 que le premier chanfrein 545, et moins incliné que lui par rapport à cet axe.

Dans la solution qui vient d'être présentée, la première partie 54 de butée est donc engagée serrée, par l'intérieur, dans l'orifice 60, jusqu'à butée de l'extrémité libre du doigt 543 contre la surface interne 112a du carter externe 112.

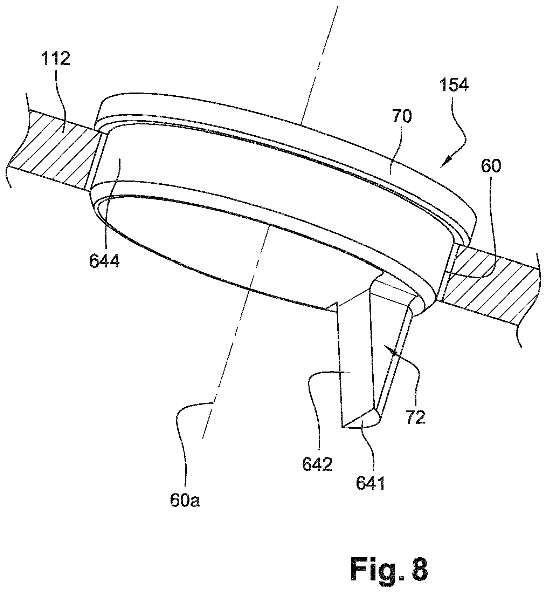

Une deuxième solution est présentée en liaison avec la figure 8.

Dans ce cas, la seconde partie 56 de butée est inchangée, mais la première partie 54 de butée est modifiée. Dans cette solution, les éléments qui peuvent être structurellement et/ou fonctionnellement identiques à ceux déjà présentés en liaison avec la solution des figures 3-7 ne sont pas redécrits ci-après ; leur référence est juste augmentée de 100 et ils sont repérés ainsi sur la figure 8.

Ainsi, la première partie de butée est référencée 154. Elle comprend, sur sa bague 644, une collerette 70, à l'endroit de son diamètre radialement extérieur. Le risque de perte de frettage en fonctionnement est ainsi limité.

En outre, la collerette pourra permettre de se dispenser de doigt d'appui (543 ci-avant). En effet, un tel doigt d'appui contre le carter 112 peut nécessiter deux opérations d'usinage (tournage + fraisage). Sans ce doigt d'appui, la fabrication de la première partie 154 de butée peut être plus aisée, et ce pour un coût moindre.

Dans cette deuxième solution, les butées radiales s'opéreront entre les surfaces axiales 641 et 560, où le jeu J peut toujours être prévu permanent. La butée axiale s'effectuera entre la surface radiale 642 orientée vers l'amont et celle 567 orientée vers l'aval de la première partie butée 54. Les surfaces 641 et 642 de la seconde partie de butée 156 sont présentes sur une excroissance 72 radialement interne de cette partie de butée qui prolonge ainsi la bague 644. Angulairement, autour de l'axe de la bague 644, l'excroissance 72 sera placée comme on aurait choisi de le faire pour le doigt 543, et face aux surfaces précitées de la première partie butée 54.

Ce mode de réalisation permet un positionnement radial par l'extérieur, plus aisé pour le monteur : l'excroissance 72 est engagée jusqu'au-delà de l'orifice 60, avec la bague 644 dans l'orifice et la collerette 70 radialement à l'extérieur.

## Revendications

1. Module de combustion de turbomachine à gaz pour aéronef présentant un axe longitudinal et comprenant,
- un carter interne (114),
- un carter externe (112) disposé à l'extérieur du carter interne, radialement à l'axe longitudinal,
- une chambre de combustion (110) :
-- allongée selon une direction axiale (134) confondue avec ledit axe longitudinal,
-- dans laquelle un mélange d'air et de carburant doit circuler d'amont vers l'aval, et
-- disposée entre le carter interne et le carter externe, la chambre de combustion comprenant, autour de l'axe longitudinal, une paroi de révolution interne (118) et une paroi de révolution externe (116) reliées en amont à une paroi de fond de chambre (120) et fixées en aval respectivement avec le carter interne (114) et le carter externe (112), et
- des premières parties (54,154) de butées et des secondes parties (56) de butées fixées respectivement avec le carter externe et avec la chambre de combustion, les premières et secondes parties de butées étant adaptées pour venir en butée sensiblement axialement deux à deux en formant des couples (58) de butées, et, dans certains au moins des couples de butées la première partie (54,154) de butée se présentant comme une excroissance intérieure présente sur le carter externe (112), à surfaces (541,542; 641,642) respectivement axiale et radiale, vis-à-vis de l'axe longitudinal, **caractérisé en ce que** :
- la seconde partie (56) de butée présente une surface extérieure circonférentielle (560) à composante axiale, et
- de la surface extérieure circonférentielle (560) à composante axiale fait saillie localement, en regard de la première partie de butée, une excroissance (561) extérieure, radiale à l'axe longitudinal, contre laquelle vient en butée la surface radiale (542) de la première partie de butée.

2. Module de combustion selon la revendication 1, dans lequel les secondes parties (56) de butées fixées avec la chambre de combustion viennent en butée de l'amont vers l'aval avec les premières parties (54) de butées.

3. Module de combustion selon l'une quelconque des revendications précédentes, dans lequel au moins un jeu (J) sensiblement radial est établi entre les première (54,154) et seconde (56) parties de butées de chaque couple de butées.

4. Module de combustion selon l'une quelconque des revendications précédentes dans lequel la butée entre ladite excroissance (561) et la surface sensiblement radiale (542) de la première partie de butée s'opère entre deux surfaces ((542,567) planes afin d'assurer un contact alors plan-plan.

5. Module de combustion selon l'une quelconque des revendications précédentes dans lequel, à température ambiante et turbomachine à l'arrêt, dans certains au moins des couples (58) de butées, la seconde partie (56) de butée est axialement en butée contre la première partie (54,154) de butée.

6. Module de combustion selon l'une quelconque des revendications précédentes:
- qui comprend en outre au moins un injecteur (132) de carburant passant à travers au moins un orifice (60) du carter externe pour amener du carburant à l'intérieur de la chambre de combustion, et
- dans lequel, sur au moins un dit couple (58) de butées :
-- par l'intermédiaire d'une partie (544,644) formant une bague, la première partie (54,154) de butée est montée dans l'orifice (60) du carter externe (112), et
-- la seconde partie (56) de butée appartient à une plaque (560) localement épaulée, fixée sur une périphérie extérieure (1160) de la chambre de combustion.

7. Module de combustion selon l'une quelconque des revendications précédentes, dans lequel, sur la première partie (54) de butée, l'excroissance intérieure présente un doigt (543) qui s'appuie contre une surface interne (112a) du carter externe (112).

8. Module de combustion selon la revendication 5, dans lequel la partie (644) formant bague présente une collerette (70), à l'endroit d'un diamètre radialement extérieur, l'excroissance intérieure étant dépourvue d'appui contre le carter externe (112).

9. Module de combustion selon l'une quelconque des revendications, dans lequel :
- la paroi de révolution externe (116) est reliée à la paroi (120) de fond de chambre par des vis (62),
- et les secondes parties (56) de butées sont fixées de façon radialement extérieure avec la chambre de combustion par certaines desdites vis (62).

10. Module de combustion selon l'une quelconque des revendications précédentes, dans lequel les couples (58) de butées sont disposés en azimuth au moins à 12H et 6H.

11. Module de combustion selon l'une quelconque des revendications précédentes, qui comprend en outre, pour fixer ladite chambre au carter externe (112), des moyens (148) de fixation amont de la chambre de combustion (110) comprenant au moins trois broches (148) de fixation circonférentiellement réparties autour de l'axe longitudinal.

12. Partie de turbomachine présentant un axe longitudinal (134) et comprenant un module de combustion selon l'une quelconque des revendications précédentes dont l'axe longitudinal (134), qui est de revolution, est confondu avec ledit axe longitudinal de la partie de turbomachine.

13. Partie de turbomachine selon la revendication 12 :
- comprenant en outre au moins un compresseur (103) et un diffuseur d'air (107) situé en sortie dudit au moins un compresseur (103), et
- dont le carter interne (114) du module de combustion comprend un voile intermédiaire (128) fixé avec une virole (126) du diffuseur (107).

## Patentansprüche

1. Gasturbomaschinen-Verbrennungsmodul für Luftfahrzeuge, das eine Längsachse aufweist und Folgendes enthält:
- ein Innengehäuse (114),
- ein Außengehäuse (112), das radial zur Längsachse außerhalb des Innengehäuses angeordnet ist,
- eine Brennkammer (110),
-- die sich in einer axialen Richtung (134) erstreckt, die mit der Längsachse zusammenfällt,
-- in der ein Gemisch aus Luft und Treibstoff von stromaufwärts nach stromabwärts strömen soll, und
-- die zwischen dem Innengehäuse und dem Außengehäuse angeordnet ist, wobei die Brennkammer um die Längsachse herum eine innere Umlaufwand (118) und eine äußere Umlaufwand (116) enthält, die stromaufwärts mit einer Kammerbodenwand (120) verbunden sind und stromabwärts jeweils mit dem Innengehäuse (114) bzw. dem Außengehäuse (112) fixiert sind, und
- erste Anschlagabschnitte (54, 154) und zweite Anschlagabschnitte (56), die jeweils mit dem Außengehäuse bzw. mit der Brennkammer fixiert sind, wobei die ersten und zweiten Anschlagabschnitte dazu geeignet sind, im Wesentlichen axial paarweise in Anschlag zu gelangen und dabei Anschlagpaare (58) zu bilden, und wobei zumindest bei einigen der Anschlagpaare der erste Anschlagabschnitt (54, 154) als ein innerer Vorsprung ausgebildet ist, der an dem Außengehäuse (112) vorliegt und eine bezüglich der Längsachse axial bzw. radial verlaufende Fläche (541, 542; 641, 642) aufweist,
**dadurch gekennzeichnet, dass**
- der zweite Anschlagabschnitt (56) eine Umfangsaußenfläche (560) mit axialer Komponente aufweist, und
- von der Umfangsaußenfläche (560) mit axialer Komponente gegenüber dem ersten Anschlagabschnitt bereichsweise ein radial zur Längsachse verlaufender äußerer Vorsprung (561) abragt, an den die radiale Fläche (542) des ersten Anschlagabschnitts in Anschlag gelangt.

2. Verbrennungsmodul nach Anspruch 1,
wobei die mit der Brennkammer fixierten zweiten Anschlagabschnitte (56) von stromaufwärts nach stromabwärts mit den ersten Anschlagabschnitten (54) in Anschlag gelangen.

3. Verbrennungsmodul nach einem der vorhergehenden Ansprüche,
wobei zwischen dem ersten (54, 154) und dem zweiten (56) Anschlagabschnitt jedes Anschlagpaares mindestens ein im Wesentlichen radiales Spiel (J) besteht.

4. Verbrennungsmodul nach einem der vorhergehenden Ansprüche,
wobei der Anschlag zwischen dem Vorsprung (561) und der im Wesentlichen radialen Fläche (542) des ersten Anschlagabschnitts zwischen zwei ebenen Flächen (542, 567) erfolgt, um einen dann flächigen Kontakt zu gewährleisten.

5. Verbrennungsmodul nach einem der vorhergehenden Ansprüche,
wobei bei Raumtemperatur und stehender Turbomaschine bei mindestens einigen der Anschlagspaare (58) der zweite Anschlagabschnitt (56) axial an den ersten Anschlagabschnitt (54, 154) in Anschlag gelangt.

6. Verbrennungsmodul nach einem der vorhergehenden Ansprüche,
- das ferner mindestens eine Treibstoffeinspritzdüse (132) enthält, die durch mindestens eine Öffnung (60) des Außengehäuses hindurchgeht, um Treibstoff in das Innere der Brennkammer zu leiten, und
- wobei mindestens an dem einen Anschlagpaar (58)
-- über einen einen Ring bildenden Abschnitt (544, 644) der erste Anschlagabschnitt (54, 154) in der Öffnung (60) des Außengehäuses (112) angebracht ist, und
-- der zweite Anschlagabschnitt (56) zu einer bereichsweise abgestützten Platte (560) gehört, die an einem Außenumfang (1160) der Brennkammer befestigt ist.

7. Verbrennungsmodul nach einem der vorhergehenden Ansprüche,
wobei an dem ersten Anschlagabschnitt (54) der innere Vorsprung einen Finger (543) aufweist, der sich an einer Innenfläche (112a) des Außengehäuses (112) abstützt.

8. Verbrennungsmodul nach Anspruch 5,
wobei der Ringabschnitt (644) an der Stelle eines radial äußeren Durchmessers einen Kragen (70) aufweist, wobei der innere Vorsprung keine Abstützung an dem Außengehäuse (112) hat.

9. Verbrennungsmodul nach einem der vorhergehenden Ansprüche, wobei
- die äußere Umlaufwand (116) mittels Schrauben (62) mit der Kammerbodenwand (120) verbunden ist,
- und die zweiten Anschlagabschnitte (56) mittels einigen der Schrauben (62) radial außen mit der Brennkammer fixiert sind.

10. Verbrennungsmodul nach einem der vorhergehenden Ansprüche, wobei die Anschlagpaare (58) zumindest bei 12 Uhr und 6 Uhr azimutal angeordnet sind.

11. Verbrennungsmodul nach einem der vorhergehenden Ansprüche, ferner enthaltend Befestigungsmittel (148) zur stromaufwärtigen Befestigung der Brennkammer (110), um die Kammer am Außengehäuse (112) zu befestigen, die zumindest drei Befestigungsdorne (148) aufweisen, die umfänglich um die Längsachse herum verteilt sind.

12. Turbomaschinenabschnitt mit einer Längsachse (134) und einem Verbrennungsmodul nach einem der vorhergehenden Ansprüche, dessen Umlauflängsachse (134) mit der Längsachse des Turbomaschinenabschnitts zusammenfällt.

13. Turbomaschinenabschnitt nach Anspruch 12,
- ferner enthaltend zumindest einen Verdichter (103) und einen Luftdiffusor (107), der sich am Auslass des zumindest einen Verdichters (103) befindet, und
- wobei das Innengehäuse (114) des Verbrennungsmoduls einen Zwischensteg (128) aufweist, der mit einem Mantelring (126) des Diffusors (107) fixiert ist.

## Claims

1. A combustion module for an aeronautical gas turbine engine, the combustion module having a longitudinal axis,
- an inner housing (114),
- an outer housing (112) arranged radially outside the inner housing,
- a combustion chamber (110):
-- elongated in an axial direction (134) coaxial with said longitudinal axis,
-- in which a mixture of air and fuel can flow from upstream to downstream, and
-- disposed between the inner housing and the outer housing, the combustion chamber comprising an inner revolution wall (118) and an outer revolution wall (116) both connected upstream to a chamber bottom wall (120) and both fixed downstream to the inner housing (114) and the outer housing (112), respectively, and
- first stop parts (54, 154) and second stop parts (56) fixed respectively to the outer housing and to the combustion chamber, the first and second stop parts being adapted to come to a substantially axial stop two by two by forming stop pairs (58), and, in at least some pairs of said stops, the first stop part (54, 154) being an internal protrusion present on the outer housing (112), having surfaces (541, 542; 641, 642) respectively axial and radial, **characterized in that** :
- the second stop part (56) has a circumferential outer surface (560) with an axial component, and
- an outer radial protrusion (561), which is radial to the longitudinal axis and against which the radial surface (542) of the first stop part comes into contact, projects locally, opposite the first stop part, from said circumferential outer surface (560) with axial component.

2. The combustion module according to claim 1, in which the second stop parts (56) fixed to the combustion chamber come into contact from upstream to downstream with the first stop parts (54).

3. The combustion module according to any of the above claims, wherein at least one substantially radial clearance (J) is established between the first (54,154) and second (56) stop parts of each stop pair.

4. The combustion module according to any of the foregoing claims in which the stop between said protrusion (561) and the substantially radial surface (542) of the first stop part occurs between two plane surfaces (542,567) in order to ensure a plane-to-plane contact.

5. The combustion module according to any of the above claims in which, at room temperature and with the turbine engine idle, in at least some of the stop pairs (58), the second stop part (56) is axially abutting against the first stop part (54, 154).

6. The combustion module according to any of the above claims:
- which further comprises at least one fuel injector (132) passing through at least one orifice (60) of the outer housing to bring fuel into the combustion chamber, and
- in which, on at least one said stop pair (58):
-- through a part (544, 644) forming a ring, the first stop part (54, 154) is mounted in the orifice (60) of the outer housing (112), and
-- the second stop part (56) belongs to a locally shouldered plate (560), fixed on an outer periphery (1160) of the combustion chamber.

7. The combustion module according to any of the above claims, in which, on the first stop part (54), the inner protrusion has a finger (543) which rests against an inner surface (112a) of the outer housing (112).

8. The combustion module according to claim 5, wherein the ring portion (644) has a flange (70) at the location of a radially outer diameter, the inner protrusion being free of support against the outer housing (112).

9. The combustion module according to any of the above claims, wherein:
- the outer revolution wall (116) is connected to the chamber bottom wall (120) by screws (62),
- and the second stop parts (56) are fixed radially outwardly to the combustion chamber by some of said screws (62).

10. The combustion module according to any of the above claims, wherein the stop pairs (58) are arranged in azimuth at least at 12 hours and 6 hours.

11. The combustion module according to any of the above claims, which further comprises), for fixing said combustion chamber to the outer housing (112), fixing means (148) providing an upstream fixation of the combustion chamber (110) and comprising at least three fixing pins (148) circumferentially distributed about the longitudinal axis.

12. A part of an aeronautical turbo engine comprising the combustion module according to any of the preceding claims whose longitudinal axis (134), which an axis of revolution, is the same the longitudinal axis of said turbo engine part.

13. The part according to claim 12:
- further comprising at least one compressor and an air diffuser (107) located at the outlet of said at least one compressor (103), and
- whose inner housing (114) of the combustion module comprises an intermediate wall (128) fixed with a ferrule (126) of the diffuser (107).
